# EUROPEAN PATENT APPLICATION

(11) **EP 4 174 678 A1**
(43) Date of publication of application: **03.05.2023**
(21) Application number: 21930626.3
(22) Date of filing: 12.10.2021
(51) Int. Cl.: G06F 16/22

(54) **CLOUD ANALYSIS SCENARIO-BASED HYBRID QUERY METHOD AND SYSTEM, AND STORAGE MEDIUM**

(30) Priority: 10.09.2021 CN 202111062067
(71) Applicant: Shanghai Kyligence Information Technology Co., Ltd, Shanghai 200120 (CN)
(72) Inventor: CHEN, Chang, Shanghai 200120 (CN); LIU, Neng, Shanghai 200120 (CN); MA, Hongbin, Shanghai 200120 (CN); LI, Yang, Shanghai 200120 (CN); HAN, Qing, Shanghai 200120 (CN)
(74) Representative: Ipey
(86) International application number: PCT/CN2021/123289
(87) International publication number: WO 2023/035356

(57) **Abstract**

The present invention discloses a method and a system for hybrid query based on a cloud analysis scene, and a storage medium. The method comprises the following steps: obtaining query information, and obtaining an index thereof based on the query information; obtaining meta-information of the index based on pre-computation, and comparing the obtained meta-information with the meta-information of an aggregate index; and determining a query mode corresponding to the meta-information based on a comparison result, the query mode including a query mode of storage-computation separation or a MPP architecture. The present invention solves the technical problem that in an ultra-high-dimensional environment, how to enable a pre-computation query system to most efficiently and more stably utilize the pre-computation result to respond to the query of a client most quickly and avoid generating a large amount of redundant data.

## Description

### Technical Field

The present invention belongs to the technical field of data processing, and particularly relates to a method and a system for hybrid query based on a cloud analysis scene, and a storage medium.

### Background Art

In the digital background, the data scale of the typical application scenario of big data increases exponentially. Even so, people still hope to mine the commercial value from the data more accurately, efficiently, conveniently and densely. This puts forward high requirements for query systems to process these data. Typical traditional distributed query computing architectures will occupy more memory resources, network resources and CPU resources to meet the increasing business needs, so some query systems based on the pre-computation theory have begun to receive attention, such as Apache Kylin and Apache Druid. Such pre-computation systems can complete part of computation in advance by utilizing unoccupied computation and storage resources, and store these computation results in a persistent storage medium; when a user queries, the query of the user can be answered only by reprocessing a small amount of data, so the system has great advantages in the aspects of query response speed, throughput and the like. In addition, in order to keep the compatibility with a business system (including a BI tool, a report, a data analysis algorithm and the like), the pre-computation data query system generally provides a SQL or a language similar to the SQL like a universal query system.

For different queries, the aggregate indexes expected to be selected by the pre-computation query system are different. Therefore, a great choice is provided for a distributed physical execution model: When a certain query selects an aggregate index with a very high aggregation degree (generally speaking, the aggregate index with a small number of data rows), such as an aggregate index aggregated according to an age dimension, the amount of data needing to be accessed for completing the query is very small (two rows under normal conditions); and if the query selects an aggregate index with a low aggregation degree, which is aggregated according to a dimension of a underwriter and a date (generally speaking, the number of data rows is large), the amount of data needing to be accessed is still very large.

In large-scale online multi-dimensional analysis, the pre-computation query system has two basic problems: Dimension explosion and cold start. For example, 10 dimensions will generate 1,024 dimension combinations; and 11 dimensions will generate 2,048 dimension combinations. Apache Kylin can significantly improve the average response time by cleverly selecting the aggregate index to be pre-calculated; but with the increase of the dimensions, for example, the current typical user tag system often has at least 500 dimensions, which makes the selected the aggregate index become impractical, especially in the distributed environment in the cloud, and the two problems are enlarged due to the object storage. In this ultra-high-dimensional environment, how to enable a pre-computation query system to most efficiently and more stably utilize the pre-computation result to respond to the query of a client most quickly and avoid generating a large amount of redundant data is the problem to be solved by the present invention.

In conclusion, the prior art has the following technical problems:
In this ultra-high-dimensional environment, how to enable a pre-computation query system to most efficiently and more stably utilize the pre-computation result to respond to the query of a client most quickly and avoid generating a large amount of redundant data.

### Summary of the Present Invention

In order to solve the above technical problems, the present invention provides a method for hybrid query based on a cloud analysis scene, and the method comprises the following steps:
obtaining query information, and obtaining an index thereof based on the query information;
obtaining meta-information of the index based on pre-computation, and comparing the obtained meta-information with the meta-information of an aggregate index; and
determining a query mode corresponding to the meta-information based on a comparison result, the query mode including a query mode of storage-computation separation or a MPP architecture.

Preferably, the step of obtaining the query information, and obtaining the index thereof based on the query information specifically includes:
obtaining a SQL query statement;
obtaining a SQL analyzer, and analyzing the SQL query statement into a syntax tree; and
extracting the query information as the index based on the syntax tree.

Preferably, the step of constructing the aggregate index specifically includes:
obtaining a data volume of historical query information;
obtaining a dimension and a measurement of the historical query information if the data volume of the historical query information reaches a preset threshold value;
constructing the aggregate index based on the use frequency of the dimension and the measurement, and loading the meta-information of the aggregate index into an object storage;
constructing a new aggregate index based on the new data increment of the dimension and the measurement, and deleting the old aggregate index with reduced use frequency; and
loading the meta-information of the new aggregate index into the object storage based on pre-computation, and updating the meta-information of the aggregate index.

Preferably, the step of constructing the new aggregate index based on the new data increment of the dimension and the measurement, and deleting the old aggregate index with reduced use frequency specifically includes:
determining whether to construct the new aggregate index based on user selection after receiving a request for constructing the new aggregate index;
constructing the new aggregate index based on the new data increment of the dimension and the measurement every preset time in case of determining to construct the new aggregate index, and stopping in case of determining not to construct the new aggregate index; and
asynchronously deleting the old aggregate index, namely marking as deletable, and physically deleting the old aggregate index in the subsequent garbage cleaning process.

Preferably, the step of obtaining the meta-information of the index based on pre-computation, and comparing the obtained meta-information with the meta-information of the aggregate index specifically includes:
extracting the meta-information from the index;
comparing the meta-information of the index with the meta-information of the aggregate index in the obtained object storage; and
hitting the aggregate index in case that the meta-information of the index is the same as the meta-information of the aggregate index, otherwise, not hitting the aggregate index.

Preferably, the step of determining the query mode corresponding to the meta-information based on the comparison result, the query mode including the query mode of storage-computation separation or the MPP architecture specifically includes:
obtaining a cost-based rule base, the cost-based rule base including preferentially selecting the query mode storage-computation separation in case of two the same meta-information, otherwise, preferentially selecting the query mode of the MPP architecture;
obtaining the comparison result, and selecting based on the cost-based rule base; and obtaining a query result of storage-computation separation or a MPP architecture.

Preferably, the step of obtaining the cost-based rule base further includes:
pushing the identification of the query statement down to a database of the MPP architecture;
identifying aggregation and filtering parts in the query statement in the database; and completing aggregation in the database of the MPP architecture, and returning the query result.

A system for hybrid query based on a cloud analysis scene is characterized by comprising:
a query input module used for obtaining query information, and obtaining the index thereof based on the query information;
a pre-computation module used for obtaining meta-information of the index based on pre-computation, and comparing the obtained meta-information with the meta-information of the aggregate index; and
a query selection module used for selecting the query mode of storage-computation separation or a MPP architecture and returning the query result according to whether the aggregate index is hit or not.

Preferably, the query input module specifically includes:
obtaining a SQL query statement;
obtaining a SQL analyzer, and analyzing the SQL query statement into a syntax tree; and
extracting the query information as the index based on the syntax tree.

Preferably, the query input module specifically includes:
obtaining a data volume of historical query information;
obtaining a dimension and a measurement of the historical query information if the data volume of the historical query information reaches a preset threshold value;
constructing the aggregate index based on the use frequency of the dimension and the measurement, and loading the meta-information of the aggregate index into an object storage;
constructing a new aggregate index based on the new data increment of the dimension and the measurement, and deleting the old aggregate index with reduced use frequency; and
loading the meta-information of the new aggregate index into the object storage based on pre-computation, and updating the meta-information of the aggregate index.

Preferably, the query input module specifically includes:
determining whether to construct the new aggregate index based on user selection after receiving a request for constructing the new aggregate index;
constructing the new aggregate index based on the new data increment of the dimension and the measurement every preset time in case of determining to construct the new aggregate index, and stopping in case of determining not to construct the new aggregate index; and
asynchronously deleting the old aggregate index, namely marking as deletable, and physically deleting the old aggregate index in the subsequent garbage cleaning process.

Preferably, the pre-computation module specifically includes:
extracting the meta-information from the index;
comparing the meta-information of the index with the meta-information of the aggregate index in the obtained object storage; and
hitting the aggregate index in case that the meta-information of the index is the same as the meta-information of the aggregate index, otherwise, not hitting the aggregate index.

Preferably, the query selection module specifically includes:
obtaining a cost-based rule base, the cost-based rule base including preferentially selecting the query mode storage-computation separation in case of two the same meta-information, otherwise, preferentially selecting the query mode of the MPP architecture;
obtaining the comparison result, and selecting based on the cost-based rule base; and obtaining a query result of storage-computation separation or a MPP architecture.

Preferably, the query selection module specifically includes:
pushing the identification of the query statement down to a database of the MPP architecture;
identifying aggregation and filtering parts in the query statement in the database; and completing aggregation in the database of the MPP architecture, and returning the query result.

Electronic equipment comprises a memory and a processor, wherein the memory stores a computer program; and the electronic equipment is characterized in that the computer program executes any one of the abovementioned methods in the processor.

The storage medium stores the computer program which executes any one of the abovementioned methods in the processor.

According to the present invention, two common distributed computing architectures of the pre-computation query system are classified, thus providing an optimization strategy for the query system based on the pre-computation theory; the optimal distributed computation structure is dynamically and intelligently selected according to the meta-information of the pre-computation result and the characteristics of the query, thereby realizing the technical effect of taking the sub-second-level high-performance query response as the result, supporting the higher high-concurrency dimension search to meet the service demand, and guaranteeing the stability of the query system.

### Brief Description of the Drawings

FIG. 1 is a flow chart of a method for hybrid query based on a cloud analysis scene of the present invention;
FIG. 2 is a schematic diagram of an analysis result of a SQL query statement of the present invention;
FIG. 3 is a bar-shaped schematic diagram of a test result based on a user 2 of the present invention; and
FIG. 4 is a bar-shaped schematic diagram of a test result based on a user 4 of the present invention.

### Detailed Description of the Present Invention

In order to make the objectives, technical solutions and advantages of the present invention clearer, the present invention will be further described in detail below with reference to the accompanying drawings and embodiments. It is to be understood that, in the description of the present invention, unless otherwise expressly specified and limited, the term "storage medium" can be various media that can store computer programs, such as ROM, RAM, magnetic disk or optical disk. The term "processor" can be CPLD (Complex Programmable Logic Device), FPGA (Field-Programmable Gate Array), MCU (Microcontroller Unit), PLC (Programmable Logic Controller) and CPU (Central Processing Unit) and other chips or circuits with data processing functions. The term "electronic equipment" can be any device with data processing and storage functions, and can generally include a fixed terminal and a mobile terminal. The fixed terminal can be a desktop, etc. The mobile terminal can be a mobile phone, a PAD, a mobile robot, etc. In addition, the technical features involved in the different embodiments of the present invention described later can be combined with each other as long as there is no conflict with each other.

The present invention provides some preferred embodiments below to teach those skilled in the art to realize them.

### Embodiment 1

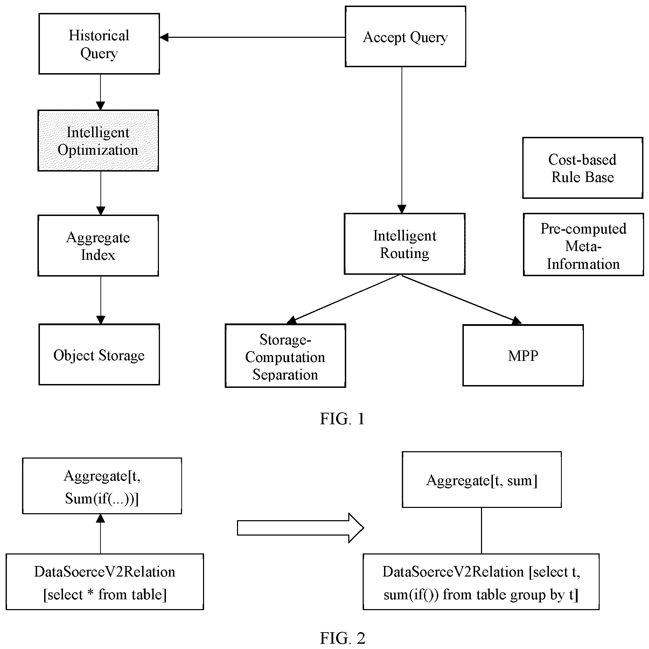

An embodiment provides a method for hybrid query based on a cloud analysis scene, as shown in FIG. 1, the method comprises the following steps:
S100, obtaining query information, and obtaining an index thereof based on the query information;
S200, obtaining meta-information of the index based on pre-computation, and comparing the obtained meta-information with the meta-information of an aggregate index; and
S300, determining a query mode corresponding to the meta-information based on a comparison result, the query mode including a query mode of storage-computation separation or a MPP architecture.

In a further embodiment, as shown in FIG. 2, the step of obtaining the query information, and obtaining the index thereof based on the query information specifically includes:
S110, obtaining a SQL query statement;
S120, obtaining a SQL analyzer, and analyzing the SQL query statement into a syntax tree; and
S130, extracting the query information as the index based on the syntax tree.

In a still further embodiment, the step of extracting the query information as the index based on the syntax tree specifically includes:
S131, obtaining a dimension and a measurement of the query information based on the syntax tree;
S132, obtaining the dimension and the measurement of the index, and comparing the dimension and the measurement of the index with the dimension and the measurement of the query; and
S133, selecting a matched index, the matched index being a preset basic index.

In a further embodiment, the step of constructing the aggregate index specifically includes:
S140, obtaining a data volume of historical query information;
S150, obtaining a dimension and a measurement of the historical query information if the data volume of the historical query information reaches a preset threshold value;
S160, constructing the aggregate index based on the use frequency of the dimension and the measurement, and loading the meta-information of the aggregate index into an object storage;
S170, constructing a new aggregate index based on the new data increment of the dimension and the measurement, and deleting the old aggregate index with reduced use frequency; and
S180, loading the meta-information of the new aggregate index into the object storage based on pre-computation, and updating the meta-information of the aggregate index.

In a further embodiment, the step of constructing the aggregate index based on the use frequency of the dimension and the measurement specifically includes:
S151, analyzing a user behavior based on an intelligent optimization system;
S152, determining a query habit of the user based on the analysis result, the query habit including but being not limited to the type of the dimension selected by the user and the range of the measurement selected by the user; and
S153, constructing the aggregate index based on the query habit of the user.

In a still further embodiment, the step of constructing the new aggregate index based on the new data increment of the dimension and the measurement, and deleting the old aggregate index with reduced use frequency specifically includes:
S161, determining whether to construct the new aggregate index based on user selection after receiving a request for constructing the new aggregate index;
S162, constructing the new aggregate index based on the new data increment of the dimension and the measurement every preset time in case of determining to construct the new aggregate index, and stopping in case of determining not to construct the new aggregate index; and
S163, asynchronously deleting the old aggregate index, namely marking as deletable, and physically deleting the old aggregate index in the subsequent garbage cleaning process.

In a further embodiment, the step of obtaining meta-information of the index based on pre-computation, and comparing the obtained meta-information with the meta-information of the aggregate index specifically includes:
S210, extracting the meta-information from the index;
S220, comparing the meta-information of the index with the meta-information of the aggregate index in the obtained object storage; and
S230, hitting the aggregate index in case that the meta-information of the index is the same as the meta-information of the aggregate index, otherwise, not hitting the aggregate index.

In a further embodiment, the step of determining the query mode corresponding to the meta-information based on the comparison result, the query mode including the query mode of storage-computation separation or the MPP architecture specifically includes:
S310, obtaining a cost-based rule base, the cost-based rule base including preferentially selecting the query mode storage-computation separation in case of two the same meta-information, otherwise, preferentially selecting the query mode of the MPP architecture;
S320, obtaining the comparison result, and selecting based on the cost-based rule base; and
S330, obtaining the query result of storage-computation separation or a MPP architecture.

In a still further embodiment, the step of obtaining the cost-based rule base further includes:
S321, pushing the identification of the query statement down to a database of the MPP architecture;
S322, identifying aggregation and filtering parts in the query statement in the database; and
S323, completing aggregation in the database of the MPP architecture, and returning the query result.

From the above description, the present invention achieves the following technical effects:
1, two common distributed computing architectures of the pre-computation query system are classified, thus achieving the technical problem of providing the optimization strategy for the query system based on the pre-computation theory;
2, the technical effect of dynamically and intelligently selecting an optimal distributed computation structure is achieved according to the meta-information of the pre-computation result and the characteristics of the query; and
3, the sub-second-level high-performance query response is realized, thus achieving the technical effect of supporting the higher high-concurrency dimension search to meet the service demand, and guaranteeing the stability of the query system.

### Embodiment 2

The embodiment provides a system for hybrid query based on a cloud analysis scene. The system is characterized by comprising:
a query input module used for obtaining query information, and obtaining the index thereof based on the query information;
a pre-computation module used for obtaining meta-information of the index based on pre-computation, and comparing the obtained meta-information with the meta-information of the aggregate index; and
a query selection module used for selecting the query mode of storage-computation separation or a MPP architecture and returning the query result according to whether the aggregate index is hit or not.

In a further embodiment, the query input module specifically includes:
obtaining a SQL query statement;
obtaining a SQL analyzer, and analyzing the SQL query statement into a syntax tree; and
extracting the query information as the index based on the syntax tree.

In a further embodiment, the query input module specifically includes:
obtaining a data volume of historical query information;
obtaining a dimension and a measurement of the historical query information if the data volume of the historical query information reaches a preset threshold value;
constructing the aggregate index based on the use frequency of the dimension and the measurement, and loading the meta-information of the aggregate index into an object storage;
constructing a new aggregate index based on the new data increment of the dimension and the measurement, and deleting the old aggregate index with reduced use frequency; and
loading the meta-information of the new aggregate index into the object storage based on pre-computation, and updating the meta-information of the aggregate index.

In a further embodiment, the query input module specifically includes:
determining whether to construct the new aggregate index based on user selection after receiving a request for constructing the new aggregate index;
constructing the new aggregate index based on the new data increment of the dimension and the measurement every preset time in case of determining to construct the new aggregate index, and stopping in case of determining not to construct the new aggregate index; and
asynchronously deleting the old aggregate index, namely marking as deletable, and physically deleting the old aggregate index in the subsequent garbage cleaning process.

In a further embodiment, the pre-computation module specifically includes:
extracting the meta-information from the index;
comparing the meta-information of the index with the meta-information of the aggregate index in the obtained object storage; and
hitting the aggregate index in case that the meta-information of the index is the same as the meta-information of the aggregate index, otherwise, not hitting the aggregate index.

In a further embodiment, the query selection module specifically includes:
obtaining a cost-based rule base, the cost-based rule base including preferentially selecting the query mode storage-computation separation in case of two the same meta-information, otherwise, preferentially selecting the query mode of the MPP architecture;
obtaining the comparison result, and selecting based on the cost-based rule base; and obtaining a query result of storage-computation separation or a MPP architecture.

In a still further embodiment, the query selection module specifically includes:
pushing the identification of the query statement down to a database of the MPP architecture;
identifying aggregation and filtering parts in the query statement in the database; and completing aggregation in the database of the MPP architecture, and returning the query result.

### Embodiment 3

The method for hybrid query based on the cloud analysis scene provided by the embodiment comprises the following steps:
S100, obtaining query information, and obtaining an index thereof based on the query information;
In the embodiment, the obtained query information is computing the sum (amount) of insurance policy amounts of insurance sellers (seller_id) on a certain day (date).

S200, obtaining meta-information of the index based on pre-computation, and comparing the obtained meta-information with the meta-information of an aggregate index; and
Since the number of sellers may be large, when there is no query history, an aggregate index with a dimension of (seller id, date) and a measurement of the sum (amount) of insurance policy amounts is not generated initially, and thus the query statement does not hit the aggregate index.

S300, determining a query mode corresponding to the meta-information based on a comparison result, the query mode including a query mode of storage-computation separation or a MPP architecture.

This query will hit the basic index, and if only the data is read out from the MPP and aggregated at the data end, SQL 1 will involve a large amount of data scanning.

In a further embodiment, the step of obtaining the query information, and obtaining the index thereof based on the query information specifically includes:
S110, obtaining a SQL query statement;
analyzing the following query statements: SQL 1 analyzes the total transaction amount of a seller with the number of 10003 on January 1: Select sum(amount) from transactions where date='1.1' and seller _id = '10003'.

S120, obtaining a SQL analyzer, and analyzing the SQL query statement into a syntax tree, as shown in FIG. 2; and
S130, obtaining query information as an index based on the syntax tree.

In a still further embodiment, the step of obtaining the cost-based rule base further includes:
S321, pushing the identification of the query statement down to a database of the MPP architecture;
S322, identifying aggregation and filtering parts in the query statement in the database; and
S323, completing aggregation in the database of the MPP architecture, and returning the query result.

Through the influence of the rule base, the aggregation and filtering parts in SQL 1 can be identified and pushed down to a MPP database, so that aggregation is completed in the MPP database, only one piece of data is returned, data to be transmitted is greatly reduced, and the performance is improved.

In a further embodiment, the step of constructing the aggregate index specifically includes:
S140, obtaining a data volume of historical query information;
S150, obtaining a dimension and a measurement of the historical query information if the data volume of the historical query information reaches a preset threshold value; S160, constructing the aggregate index based on the use frequency of the dimension and the measurement, and loading the meta-information of the aggregate index into an object storage;
S170, constructing a new aggregate index based on the new data increment of the dimension and the measurement, and deleting the old aggregate index with reduced use frequency; and
S180, loading the meta-information of the new aggregate index into the object storage based on pre-computation, and updating the meta-information of the aggregate index.

As time goes on, if such query is very frequent (a threshold value exists in general, for example, 100 queries exist every day), the system will consider that constructing an aggregate index for the query of the mode in advance can improve the overall performance, and after pre-computation is completed, when the SQL is executed again, it will be routed to a storage-computation separation system.

In a still further embodiment, the step of constructing the new aggregate index based on the new data increment of the dimension and the measurement, and deleting the old aggregate index with reduced use frequency specifically includes:
S161, determining whether to construct the new aggregate index based on user selection after receiving a request for constructing the new aggregate index;
S162, constructing the new aggregate index based on the new data increment of the dimension and the measurement every preset time in case of determining to construct the new aggregate index, and stopping in case of determining not to construct the new aggregate index; and
S163, asynchronously deleting the old aggregate index, namely marking as deletable, and physically deleting the old aggregate index in the subsequent garbage cleaning process.

In a further embodiment, the step of obtaining meta-information of the index based on pre-computation, and comparing the obtained meta-information with the meta-information of the aggregate index specifically includes:
S210, extracting the meta-information from the index;
S220, comparing the meta-information of the index with the meta-information of the aggregate index in the obtained object storage; and
S230, hitting the aggregate index in case that the meta-information of the index is the same as the meta-information of the aggregate index, otherwise, not hitting the aggregate index.

In a further embodiment, the step of determining the query mode corresponding to the meta-information based on the comparison result, the query mode including the query mode of storage-computation separation or the MPP architecture specifically includes:
S310, obtaining a cost-based rule base, the cost-based rule base including preferentially selecting the query mode storage-computation separation in case of two the same meta-information, otherwise, preferentially selecting the query mode of the MPP architecture;
S320, obtaining the comparison result, and selecting based on the cost-based rule base; and
S330, obtaining the query result of storage-computation separation or a MPP architecture.

According to the optimizer rule, it is found from mode matching that if the aggregation operation is on the table scanning, the aggregation operation can be pushed into the table scanning to reduce data returned to a computation engine from a MPP engine. According to different SQL, the reduction amount of the data can reach the GB level.

### Embodiment 4

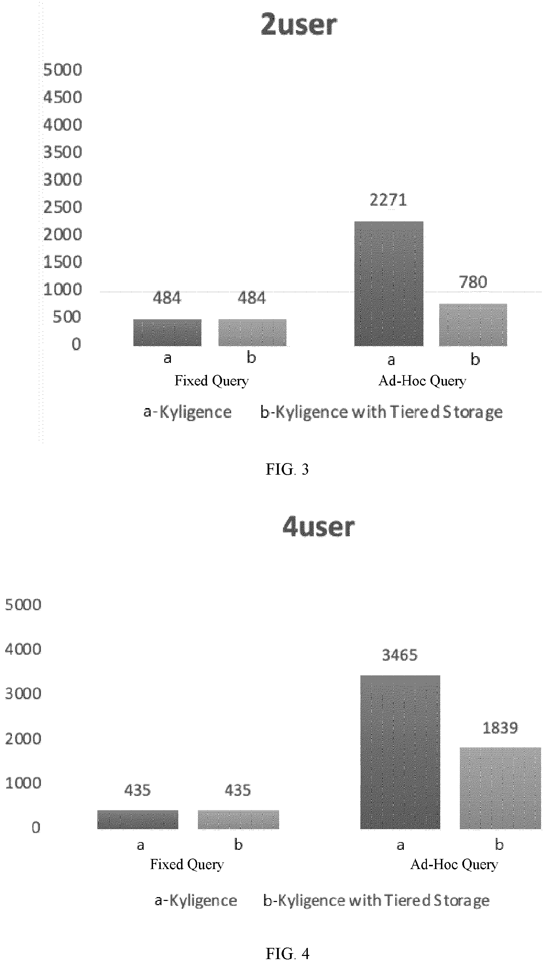

In this embodiment, pressure testing is carried out based on a data set of a user 2, and a test result is shown in FIG. 3.

Kyligence herein refers to a product without using the technology, and Kyligence with Tiered Storage refers to a latest product using the technology. Fixed query herein refers to query which can be accelerated by the aggregate index, and it can be seen that there is no any improvement. Ad-hoc query herein refers to query which cannot be accelerated by the aggregate index; after the technology is used, MPP is transparently used for acceleration; and under concurrent pressure testing of two users, the performance is improved by 3 times.

### Embodiment 5

In this embodiment, pressure testing is carried out based on a data set of a user 4, and a test result is shown in FIG. 4.

Kyligence herein refers to a product without using the technology, and Kyligence with Tiered Storage refers to a latest product using the technology. Fixed query herein refers to query which can be accelerated by the aggregate index, and it can be seen that there is no any improvement. Ad-hoc query herein refers to query which cannot be accelerated by the aggregate index; after the technology is used, MPP is transparently used for acceleration; and under concurrent pressure testing of the two users, the performance is also improved by nearly 2 times.

### Embodiment 6

The embodiment of the present invention further comprises electronic equipment, the electronic equipment comprises a memory and a processor, wherein the memory stores a computer program, and the computer program is used for realizing the hybrid query method based on the cloud analysis scene when being executed by the processor, the method comprises:
S100, obtaining query information, and obtaining an index thereof based on the query information;
S200, obtaining meta-information of the index based on pre-computation, and comparing the obtained meta-information with the meta-information of an aggregate index; and
S300, determining a query mode corresponding to the meta-information based on a comparison result, the query mode including a query mode of storage-computation separation or a MPP architecture.

### Embodiment 7

In this embodiment, the present invention further provides a readable storage medium, a computer program is stored in the readable storage medium, and the computer program is used for realizing the method for hybrid query based on the cloud analysis scene when being executed by the processor, the method comprises:
S100, obtaining query information, and obtaining an index thereof based on the query information;
S200, obtaining meta-information of the index based on pre-computation, and comparing the obtained meta-information with the meta-information of an aggregate index; and
S300, determining a query mode corresponding to the meta-information based on a comparison result, the query mode including a query mode of storage-computation separation or a MPP architecture.

The readable storage medium can be a computer storage medium or a communication medium. The communication medium comprises any medium convenient for transmitting the computer program from one place to another place. The storage medium can be any available medium which can be accessed by a general purpose or special purpose computer. For example, the readable storage medium is coupled to the processor, so that the processor can read information from the readable storage medium and write the information into the readable storage medium. Certainly, the readable storage medium can also be a component of the processor. Processors and the readable storage medium can be positioned in an Application Specific Integrated Circuits (ASIC). In addition, the ASIC can be located in user equipment. Of course, the processors and the readable storage medium can also serve as discrete components in communication equipment. The readable storage medium can be a read-only memory (ROM), a random access memory (RAM), a CD-ROM, a magnetic tape, a floppy disk, optical data storage equipment and the like.

The present invention further provides a program product. The program product comprises an execution instruction which is stored in the readable storage medium. At least one processor of the equipment can read the execution instruction from the readable storage medium, and at least one processor executes the execution instruction to enable the equipment to implement the methods provided by the abovementioned various embodiments.

In the abovementioned embodiments of the terminal or server, it is to be understood that the processor may be Central Processing Unit (CPU), or other universal processors, Digital Signal Processor (DSP), etc. The general processor can be a microprocessor or any conventional processor and the like. The steps of the method disclosed by the embodiment of the present invention can be directly executed by a hardware decoding processor or executed by the combination of hardware and software modules in the decoding processor.

It needs to be explained that the steps shown in the flowchart of the drawing can be executed in a computer system such as a group of computer executable instructions; and although the logic sequence is shown in the flowchart, the shown or described steps can be executed in a sequence different from the sequence herein in some cases.

Obviously, those skilled in the art should understand that each module or each step of the present invention can be realized by the universal computing system, the modules or steps can be concentrated on a single computing system or distributed on a network formed by a plurality of computing systems, and optionally, the modules or steps can be realized by program codes executable by the computing systems, so that the modules or steps can be stored in a storage system and executed by the computing systems, or the modules or steps can be respectively manufactured into integrated circuit modules, or a plurality of modules or steps in the modules or steps are manufactured into a single integrated circuit module. Therefore, the present invention is not limited to any particular combination of hardware and software.

The above descriptions are only preferred embodiments of the present invention and are not intended to limit the present invention. Any modifications, equivalent replacements and improvements made within the spirit and principles of the present invention shall be included in the protection range of the present invention.

## Claims

1. A method for hybrid query based on a cloud analysis scene, comprising:
obtaining query information, and obtaining an index thereof based on the query information;
obtaining meta-information of the index based on pre-computation, and comparing the obtained meta-information with the meta-information of an aggregate index; and
determining a query mode corresponding to the meta-information based on a comparison result, the query mode including a query mode of storage-computation separation or a MPP architecture.

2. The method according to claim 1, wherein the step of obtaining the query information, and obtaining the index thereof based on the query information specifically includes:
obtaining a SQL query statement;
obtaining a SQL analyzer, and analyzing the SQL query statement into a syntax tree; and
extracting the query information as the index based on the syntax tree.

3. The method according to claim 1, wherein the step of constructing the aggregate index specifically includes:
obtaining a data volume of historical query information;
obtaining a dimension and a measurement of the historical query information if the data volume of the historical query information reaches a preset threshold value;
constructing the aggregate index based on the use frequency of the dimension and the measurement, and loading the meta-information of the aggregate index into an object storage;
constructing a new aggregate index based on the new data increment of the dimension and the measurement, and deleting the old aggregate index with reduced use frequency; and
loading the meta-information of the new aggregate index into the object storage based on pre-computation, and updating the meta-information of the aggregate index.

4. The method according to claim 3, wherein the step of constructing the new aggregate index based on the new data increment of the dimension and the measurement, and deleting the old aggregate index with reduced use frequency specifically includes:
determining whether to construct the new aggregate index based on user selection after receiving a request for constructing the new aggregate index;
constructing the new aggregate index based on the new data increment of the dimension and the measurement every preset time in case of determining to construct the new aggregate index, and stopping in case of determining not to construct the new aggregate index; and
asynchronously deleting the old aggregate index, namely marking as deletable, and physically deleting the old aggregate index in the subsequent garbage cleaning process.

5. The method according to claim 1, wherein the step of obtaining the meta-information of the index based on pre-computation, and comparing the obtained meta-information with the meta-information of the aggregate index specifically includes:
extracting the meta-information from the index;
comparing the meta-information of the index with the meta-information of the aggregate index in the obtained object storage; and
hitting the aggregate index in case that the meta-information of the index is the same as the meta-information of the aggregate index, otherwise, not hitting the aggregate index.

6. The method according to claim 1, wherein the step of determining the query mode corresponding to the meta-information based on the comparison result, the query mode including the query mode of storage-computation separation or the MPP architecture specifically includes:
obtaining a cost-based rule base, the cost-based rule base including preferentially selecting the query mode storage-computation separation in case of two the same meta-information, otherwise, preferentially selecting the query mode of the MPP architecture;
obtaining the comparison result, and selecting based on the cost-based rule base; and obtaining a query result of storage-computation separation or a MPP architecture.

7. The method according to claim 6, wherein the step of obtaining the cost-based rule base further includes:
pushing the identification of the query statement down to a database of the MPP architecture;
identifying aggregation and filtering parts in the query statement in the database; and completing aggregation in the database of the MPP architecture, and returning the query result.

8. A system for hybrid query based on a cloud analysis scene, comprising
a query input module used for obtaining query information, and obtaining the index thereof based on the query information;
a pre-computation module used for obtaining meta-information of the index based on pre-computation, and comparing the obtained meta-information with the meta-information of the aggregate index; and
a query selection module used for determining the query mode corresponding to the meta-information based on a comparison result, the query mode including the query mode of storage-computation separation or the MPP architecture.

9. The device according to claim 8, wherein the query input model specifically includes:
obtaining a SQL query statement;
obtaining a SQL analyzer, and analyzing the SQL query statement into a syntax tree; and
extracting the query information as the index based on the syntax tree.

10. The device according to claim 8, wherein the query input model specifically includes:
obtaining a data volume of historical query information;
obtaining a dimension and a measurement of the historical query information if the data volume of the historical query information reaches a preset threshold value;
constructing the aggregate index based on the use frequency of the dimension and the measurement, and loading the meta-information of the aggregate index into an object storage;
constructing a new aggregate index based on the new data increment of the dimension and the measurement, and deleting the old aggregate index with reduced use frequency; and
loading the meta-information of the new aggregate index into the object storage based on pre-computation, and updating the meta-information of the aggregate index.

11. The device according to claim 10, wherein the query input model specifically includes:
determining whether to construct the new aggregate index based on user selection after receiving a request for constructing the new aggregate index;
constructing the new aggregate index based on the new data increment of the dimension and the measurement every preset time in case of determining to construct the new aggregate index, and stopping in case of determining not to construct the new aggregate index; and
asynchronously deleting the old aggregate index, namely marking as deletable, and physically deleting the old aggregate index in the subsequent garbage cleaning process.

12. The device according to claim 8, wherein the pre-computation module specifically includes:
extracting the meta-information from the index;
comparing the meta-information of the index with the meta-information of the aggregate index in the obtained object storage; and
hitting the aggregate index in case that the meta-information of the index is the same as the meta-information of the aggregate index, otherwise, not hitting the aggregate index.

13. The device according to claim 8, wherein the query selection module specifically includes:
obtaining a cost-based rule base, the cost-based rule base including preferentially selecting the query mode storage-computation separation in case of two the same meta-information, otherwise, preferentially selecting the query mode of the MPP architecture;
obtaining the comparison result, and selecting based on the cost-based rule base; and obtaining a query result of storage-computation separation or a MPP architecture.

14. Electronic equipment, comprising a memory and a processor, wherein the memory stores a computer program; and the electronic equipment is **characterized in that** the computer program executes any one of the methods according to claims 1-7 in the processor.

15. A storage medium, being used for storing a computer program which executes any one of the methods according to claims 1-7 in the processor.
